# EUROPEAN PATENT APPLICATION

(11) **EP 4 042 908 A1**
(43) Date of publication of application: **17.08.2022**
(21) Application number: 21803366.0
(22) Date of filing: 11.05.2021
(51) Int. Cl.: A47J 27/00

(54) **COOKING DEVICE**

(30) Priority: 12.05.2020 CN 202010399501
(71) Applicant: Foshan Shunde Midea Electrical Heating Appliances Manufacturing Co., Ltd., Foshan, Guangdong 528311 (CN)
(72) Inventor: JIANG, Taiyang, Foshan, Guangdong 528311 (CN); MA, Zhihai, Foshan, Guangdong 528311 (CN); JIANG, Deyong, Foshan, Guangdong 528311 (CN); SU, Chang, Foshan, Guangdong 528311 (CN); LUO, Shaosheng, Foshan, Guangdong 528311 (CN); WANG, Shuai, Foshan, Guangdong 528311 (CN); ZHENG, Liang, Foshan, Guangdong 528311 (CN)
(74) Representative: Whitlock, Holly Elizabeth Ann
(86) International application number: PCT/CN2021/093094
(87) International publication number: WO 2021/228097

(57) **Abstract**

Disclosed is a cooking device (10). The cooking device (10) comprises a housing (100), a first coil (210), a second coil (220), a third coil (230) and a first circuit board (300), wherein the first coil (210) is arranged in the housing (100) and is used for generating a first alternating magnetic field that acts on a container (20) such that the container (20) generates an electrical eddy current; the second coil (220) is arranged corresponding to the container (20) and is used for the induction of the first alternating magnetic field and the electrical eddy current; the third coil (230) is arranged in the housing (100) and is used for the induction of the first alternating magnetic field; and the first circuit board (300) is used for obtaining the temperature of the container (20) according to an induction signal generated by the second coil (220). The temperature of the container (20) is measured by means of magnetic coupling, which can also solve the problems of water leakage and temperature transfer delay, resulting in the accuracy of the measurement of the temperature of the container (20) being higher and in higher measurement speed, such that the improvement of the measurement accuracy for the temperature of the container (20) and the speed thereof can provide more accurate data support for the subsequent automatic temperature control and adjustment of the cooking device (10), which is conducive to intelligent control over the cooking device (10).

## Description

The present disclosure claims the priority of Chinese Patent Application No.2020103995017, filed on May 12, 2020 and entitled "COOKING DEVICE", the entire contents of which are hereby incorporated by reference in their entireties.

### TECHNICAL FIELD

The present disclosure relates to the field of kitchen appliances, and in particular to a cooking device.

### BACKGROUND

With the improvement of people's living standards, the requirements for intelligentization of various home appliances are getting higher and higher. Cooking food generally involves heating a container containing ingredients through a cooking device. During the heating process, in order to control the degree of heating of the food or the cooking process, and to prevent the container from drying out, it is necessary to measure the temperature of the container so as to control the cooking device more intelligently.

The inventor of the present disclosure has discovered in long-term research and development that, currently, the temperature of the container is generally measured by opening a hole on the panel of the cooking device to set an NTC (Negative Temperature Coefficient) thermistor or a thermocouple temperature detector, but it is easy to cause water leakage and so on. Or the temperature of the container is measured by setting a temperature detector under the panel of the cooking device, and since the panel isolates the temperature detector from the container, the temperature transmission delay is serious, resulting in low accuracy of the temperature data measured by the temperature detector.

### SUMMARY OF THE DISCLOSURE

The disclosure provides a cooking device to solve a technical problem of low temperature measurement accuracy of a container by a cooking device in the prior art.

To solve the above technical problems, a technical solution adopted by the present disclosure is to provide a cooking device, including: a housing, defining an accommodating space; a first coil, received in the accommodating space and configured to generate a first alternating magnetic field, wherein the first alternating magnetic field is configured to act on a container arranged on inside the housing, enabling the container to induct an electrical eddy current generated by the first alternating magnetic field; a second coil, disposed corresponding to the container and configured to induct the first alternating magnetic field and the electrical eddy current; a third coil, received in the accommodating space, disposed on a side of the container 20 of the first coil and/or a side of the second coil away from the housing where the container is arranged, and configured to induct the first alternating magnetic field; or received in the accommodating space and configured to couple with the first alternating magnetic field through a magnetizer; a first circuit board, connected to the second coil and configured to obtain a temperature of the container according to an induction signal generated by the second coil; or connected to the second coil and the third coil and configured to obtain the temperature of the container according to an induction signal generated by the second coil and the third coil, wherein the second coil and the third coil are connected in series.

In some embodiments, the cooking device further comprises a first support, the first coil is wound and arranged on the first support, the second coil is arranged on the first coil.

In some embodiments, the cooking device further comprises a second support arranged on the first support, the second coil is wound around the second support.

In some embodiments, the housing comprises a base and a panel capped on the base, the cooking device further comprises an elastic support disposed between the first support and the second support to enable the second support to elastically abut against a side of the panel away from the container.

In some embodiments, the cooking device further includes a thermal insulator disposed between the second support and the panel.

In some embodiments, the cooking device further includes a second circuit board, wherein the second circuit board is arranged on the first support or the second support, the second coil is connected to the first circuit board through the second circuit board.

In some embodiments, a plane where the first coil is located, coincides with, or is parallel to a plane where the second coil is located, and the plane where the first coil is located, coincides with, or is parallel to a plane where the third coil is located.

In some embodiments, a coinciding area between a projection of the second coil and a projection of the third coil in a direction parallel to a central axis of the second coil is greater than or equal to 50% of a projection area of the third coil in the direction parallel to the central axis of the second coil.

In some embodiments, a central axis of the first coil coincides with a central axis of the second coil; or the central axis of the first coil, a central axis of the second coil, and a central axis of the third coil coincide with each other.

In some embodiments, the second coil is arranged on the first support or the base, and the second coil is spaced apart from the panel with a preset distance.

In some embodiments, the cooking device further includes a temperature sensor, wherein the temperature sensor is arranged on the first support or the second support, and configured to measure the temperature of the container.

In some embodiments, the cooking device further includes a temperature switch, wherein the temperature switch is arranged on the first support or the second support and connected to the first circuit board.

In some embodiments, a plurality of first coils are arranged, at least one of the plurality of first coils is arranged with a corresponding second coil and a corresponding third coil.

In some embodiments, the cooking device further includes a fourth coil, configured to generate a second alternating magnetic field, wherein the second alternating magnetic field acts on the container so as to electromagnetically heat the container.

In some embodiments, a plane where the first coil is located, a plane where the fourth coil is located, and a plane where the second coil is located, are coincided, or parallel with each other.

In some embodiments, a central axis of the first coil, a central axis of the second coil, and a central axis of the fourth coil coincide with each other.

The disclosure provides a cooking apparatus, the cooking apparatus includes any of above cooking devices and the container arranged on or inside the any of above cooking device.

In some embodiments, the container comprises a body and a heating body arranged in the body, the first alternating magnetic field is configured to act on the heating body so as to heat the heating body and to enable the heating body to generate the electrical eddy current, and the first circuit board is configured to obtain a temperature of the heating body.

In some embodiments, the heating body is flaky-shaped and is fixed at a bottom of the body.

In some embodiments, the heating body is barrel-shaped and is supported and arranged on an opening of the body, and the heating body defines a plurality of through holes.

In the present disclosure, the first coil, the second coil corresponding to container, the third coil, and the first circuit board are arranged in the cooking device, such that the first coil generates the first alternating magnetic field which acts on the container to make the container induct the electrical eddy current generated by the first alternating magnetic field, the second coil inducts the first alternating magnetic field and the electrical eddy current, and the third coil inducts the first alternating magnetic field, thus reducing an impact of electromagnetic induction of the first alternating magnetic field on the second coil, thereby making the first circuit board obtain the temperature of the container according to electromagnetic induction of the second coil to the electrical eddy current. The temperature of the container is measured by above means of magnetic coupling, which may solve the problems of water leakage and temperature transfer delay, resulting in the accuracy of the measurement of the temperature of the container being higher, and directly measuring the induction signal of the second coil by the first circuit board to obtain the temperature of the container. Compared with transmitting the signal to the circuit board after being measured by sensor, the means of magnetic coupling is faster, the improvement of the measurement accuracy for the temperature of the container and the speed thereof may provide users with more accurate feedback on the degree of heating or cooking process, and provide more accurate data support for the subsequent automatic temperature control and adjustment of the cooking device, which is conducive to intelligent control over the cooking device.

### BRIEF DESCRIPTION OF THE DRAWINGS

In order to explain the technical solutions in the embodiments of the present disclosure more clearly, the following will briefly introduce the drawings in the description of the embodiments. Obviously, the drawings in the following description are only some embodiments of the present disclosure. For those of ordinary skill in the art, without creative work, other drawings can be obtained based on these drawings, wherein:
FIG. 1 is an exploded structural schematic view of a cooking device according to an embodiment of the present disclosure.
FIG. 2 is a structural schematic view of a first coil and a second coil of a cooking device according to an embodiment of the present disclosure.
FIG. 3 is a structural schematic view of a part of a cooking device according to an embodiment of the present disclosure.
FIG. 4 is a cross-sectional view of a cooking device according to an embodiment of the present disclosure.
FIG. 5 is a partially exploded structural schematic view of a cooking device according to an embodiment of the present disclosure.
FIG. 6 is a structural schematic view of a first support and a third coil of a cooking device according to another embodiment of the present disclosure.
FIG. 7 is a structural schematic view of a first circuit board and a third coil of a cooking device according to another embodiment of the present disclosure.
FIG. 8 is a structural schematic view of a second coil and a wire according to an embodiment of the present disclosure.
FIG. 9 is another structural schematic view of a first support and a second coil of a cooking device according to an embodiment of the present disclosure.
FIG. 10 is another cross-sectional structural schematic view of a first support and a second coil of a cooking device according to an embodiment of the present disclosure.
FIG. 11 is another exploded structural schematic view of a first support and a second coil of a cooking device according to an embodiment of the present disclosure.
FIG. 12 is a structural schematic view of a panel and a second coil of a cooking device according to another embodiment of the present disclosure.
FIG. 13 is a side structural schematic view of a panel and a second coil of a cooking device according to another embodiment of the present disclosure.
FIG. 14 is a cross-sectional structural schematic view of a panel and a second coil of a cooking device according to another embodiment of the present disclosure.
FIG. 15 is a structural schematic view of a first support and a second coil of a cooking device according to another embodiment of the present disclosure.
FIG. 16 is an exploded structural schematic view of a first support and a second coil of a cooking device according to another embodiment of the present disclosure.
FIG. 17 is a structural schematic view of a first support and a second coil of a cooking device according to another embodiment of the present disclosure.
FIG. 18 is a structural schematic view of a base and a second coil of a cooking device according to another embodiment of the present disclosure.
FIG. 19 is a cross-sectional structural schematic view of a base and a second coil of a cooking device according to another embodiment of the present disclosure.
FIG. 20 is an exploded structural schematic view of a base and a second coil of a cooking device according to another embodiment of the present disclosure.
FIG. 21 is a structural schematic view of a first support and a plurality of second coils of a cooking device according to another embodiment of the present disclosure.
FIG. 22 is an exploded structural schematic view of a first support and a plurality of second coils of a cooking device according to another embodiment of the present disclosure.
FIG. 23 is a structural schematic view of a first coil, a second coil, a third coil of a cooking device according to another embodiment of the present disclosure.
FIG. 24 is a structural schematic view of a cooking device according to an embodiment of the present disclosure.
FIG. 25 is an exploded structural schematic view of a cooking device according to an embodiment of the present disclosure.
FIG. 26 is a top structural schematic view of a cooking device according to an embodiment of the present disclosure.
FIG. 27 is a cross-sectional structural schematic view of the cooking device along A-A direction in FIG. 26.
FIG. 28 is a structural schematic view of a cooking device according to another embodiment of the present disclosure.
FIG. 29 is an exploded structural schematic view of a cooking device according to another embodiment of the present disclosure.
FIG. 30 is a top structural schematic view of a cooking device according to another embodiment of the present disclosure.
FIG. 31 is a cross-sectional structural schematic view of the cooking device along B-B direction in FIG. 30.
FIG. 32 is a structural schematic view of a cooking device according to another embodiment of the present disclosure.
FIG. 33 is an exploded structural schematic view of a cooking device according to another embodiment of the present disclosure.
FIG. 34 is a top structural schematic view of a cooking device according to another embodiment of the present disclosure.
FIG. 35 is a cross-sectional structural schematic view of the cooking device along A-A direction in FIG. 34.

### DETAILED DESCRIPTION

The technical solutions in some embodiments of the present disclosure will be described clearly and completely in conjunction with the accompanying drawings in the embodiments of the present disclosure. Obviously, the described embodiments are only a part of the embodiments of the present disclosure, rather than all the embodiments. Based on the embodiments in the present disclosure, all other embodiments acquired by those of ordinary skill in the art without any creative work shall fall within the protection scope of the present disclosure.

The terms "first" and "second" in the present disclosure are only used for descriptive purposes, and cannot be understood as indicating or implying relative importance or implicitly indicating the number of indicated technical features. In the description of the present application, "a plurality of" means at least two, such as two, three, etc., unless specifically defined otherwise. In addition, the terms "including" and "having" and any variations thereof are intended to cover non-exclusive inclusions. For example, a process, method, system, product, or device that includes a series of steps or units is not limited to the listed steps or units, but optionally includes unlisted steps or units, or optionally also includes other steps or units inherent to these processes, methods, products or equipment. The term "and/or" is only an association relationship that describes associated objects, indicating that there can be three relationships, for example, A and/or B, which can mean: A alone exists, A and B exist at the same time, and B exists alone. These three situations. In addition, the character "/" in this text generally indicates that the associated objects before and after are in an "or" relationship.

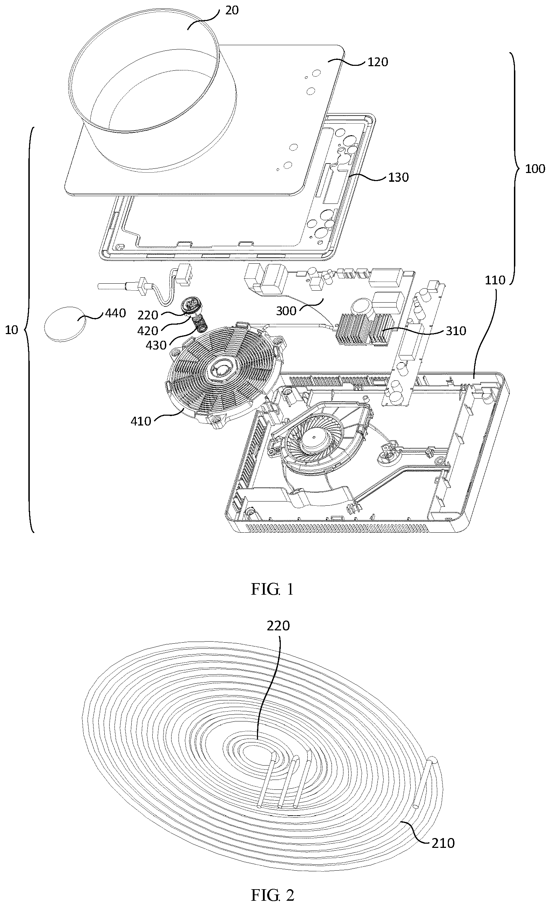

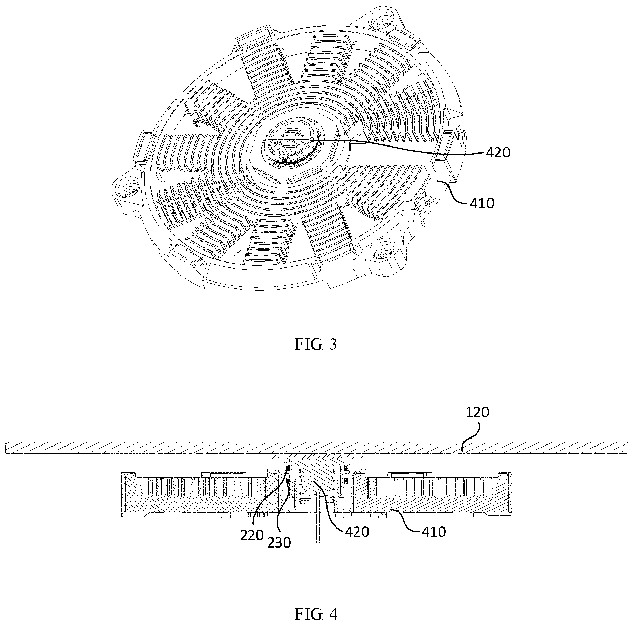

As shown in FIG. 1 to FIG. 5, the present disclosure provides a cooking device, including a housing 100, a first coil 210, a second coil 220, a third coil 230, and a first circuit board 300. The housing 100 defines an accommodating space; the first coil 210 is received in the accommodating space and configured to generate a first alternating magnetic field which acts on a container 20 received inside or arranged on the housing 100. The first alternating magnetic field may electromagnetically heat the container 20 and enable the container 20 to induce the first alternating magnetic field to generate an electrical eddy current. The electrical eddy current changes as a temperature of the container 20 changes; the second coil 220 is arranged corresponding to the container 20 and is configured to induce the first alternating magnetic field and the electrical eddy current; the third coil 230 is received in the accommodating space and is configured to induce the first alternating magnetic field; the first circuit board 300 is connected to the second coil 220 and is configured to obtain the temperature of the container 20 according to an induction signal generated by the second coil 220. Compared with a cooking device in the art, a hole may be defined in a panel of the housing to arrange a sensor, and the sensor may be in direct contact with the container to measure the temperature of the container. However, water leakage is likely to occur, causing components inside the housing damaged. Alternatively, the water leakage may be avoided by arranging the sensor on a side of the panel away from the container, but the temperature measured by the sensor is a temperature after passing through the panel, and therefore, temperature measurement may be delayed due to transmission. According to the present disclosure, the temperature of the container 20 may be measured by magnetic coupling, problems of water leakage and the delayed temperature measurement may be solved at the same time, such that an accuracy of the measurement of the temperature of the container 20 may be higher. Further, the first circuit board directly measures the induction signal of the second coil 220 to obtain the temperature of the container 20. Compared with transmitting the induction signal to the circuit board after measuring the temperature by the senor, measuring the temperature by magnetic coupling is faster. By improving the accuracy and the speed of measuring the temperature of the container 20, it provides users with more accurate feedback on the degree of heating or cooking process, more accurate data support may be provided for subsequent automatic temperature control and adjustment of the cooking device 10, allowing the cooking device 10 to be intelligently controlled.

In this embodiment, the third coil 230 is arranged on a side of the second coil 220 away from the housing 100 where the container 20 is arranged. The second coil 220 may be configured for shielding an impact of electromagnetic induction applied on the third coil 230 caused by the electrical eddy current of the container 20, such that the third coil 230 may induce the first alternating magnetic field to reduce the impact in the electromagnetic induction of the second coil 220 caused by the first alternating magnetic field, such that the first circuit board 300 may obtain the temperature of the container 20 according to the electromagnetic induction of the electrical eddy current by the second coil 220.

In some embodiments, the third coil 230 may be arranged on a side of the first coil 210 away from the housing 100 where the container 20 is arranged. The first coil 220 may be configured for shielding an impact in the electromagnetic induction of the third coil 230 caused by the electrical eddy current of the container 20. Alternatively, the third coil 230 is arranged on the side of the first coil 210 away from the housing 100 where the container 20 is arranged and the side of the second coil 220 away from the housing 100 where the container 20 is arranged, which is not limited here.

In some embodiments, the first circuit board 300 may be connected to serially connected the second coil 220 and the third coil 230 and configured to obtain the temperature of the container according to the induction signals generated by the second coil 220 and the third coil 230.

In this embodiment, the cooking device 10 may be an induction cooker, a rice cooker, and so on.

In this embodiment, the cooking device 10 may further include a heat dissipating member 310. The heat dissipating member 310 may be received in the accommodating space for dissipating heat generated by the first circuit board 300.

In this embodiment, the cooking device 10 further includes a first support 410 and a second support 420. The second support 420 is arranged on the first support 410. The first coil 210 is wound and arranged on the first support 410. The second coil 220 is wound around the second support 420. A plane where the first coil 210 is disposed coincides with or is parallel to a plane where the second coil 220 is disposed. The second coil 220 is disposed inside the first coil 210, and a central axis of the first coil 210 coincides with a central axis of the second coil 220. The plane where the first coil 210 is disposed coincides with or is parallel to a plane where the third coil 230 is disposed. The third coil 230 is disposed inside the first coil 210, and a central axis of the third coil 230 coincides with the central axis of the first coil 210 and the second coil 220. The first coil 210 is parallel to an inducting plane of the container 20 inducting the first alternating magnetic field to ensure intensity of the electric eddy current generated by the container 20. The second coil 220 is also parallel to an inducting plane of the container 20 inducting the first alternating magnetic field to increase intensity of the second coil 220 inducting the electrical eddy current. The third coil 230 is also parallel to the inducting plane of the container 20 inducting the first alternating magnetic field to increase intensity of the third coil 230 inducting the first alternating magnetic field. By increasing magnetic induction of all coils, induction signals generated by all coils may be more stable, thereby allowing the measured results to be more accurate.

In some embodiments, the central axis of the second coil 220 may not coincide with the central axis of the third coil 230, and a coinciding area of a projection of the second coil 220 and a projection of the third coil 230 in a direction parallel to the central axis of the second coil 220 is greater than or equal to 50% of a projection area of the third coil 230 in the direction parallel to the central axis of the second coil 220, such that the intensity of the first alternating magnetic field induced by the third coil 230 may reduce the impact in the electromagnetic induction of the second coil 220 caused by the first alternating magnetic field, enabling the induction signal generated by the second coil 220 according to the electromagnetic induction of electrical eddy current to be more accurate, such that the accuracy of the temperature obtained by the first circuit board 300 according to the induction signal to be higher.

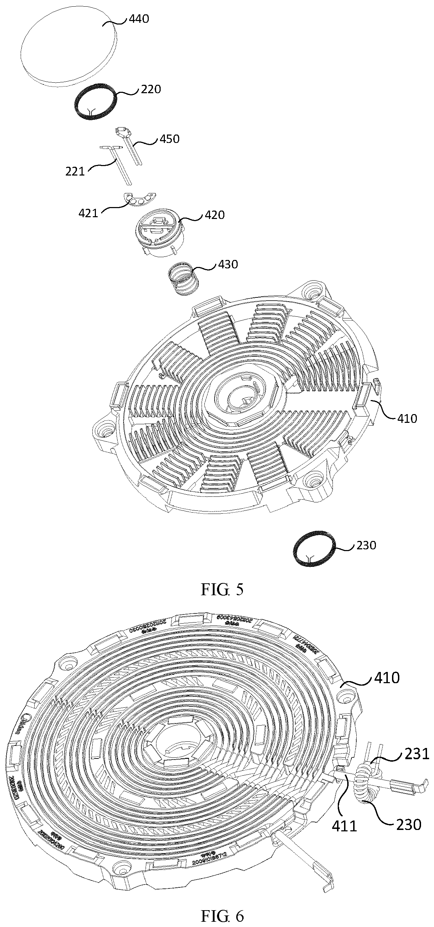

As shown in FIG. 6, in another embodiment, the third coil 230 may be arranged on the first support 410. Specifically, the first support 410 is connected to a support bar 411, the third coil 230 is wound around a magnetizer 231. The magnetizer 231 is arranged on the support bar 411. The third coil 230 couples with the first alternating magnetic field through the magnetizer 231.

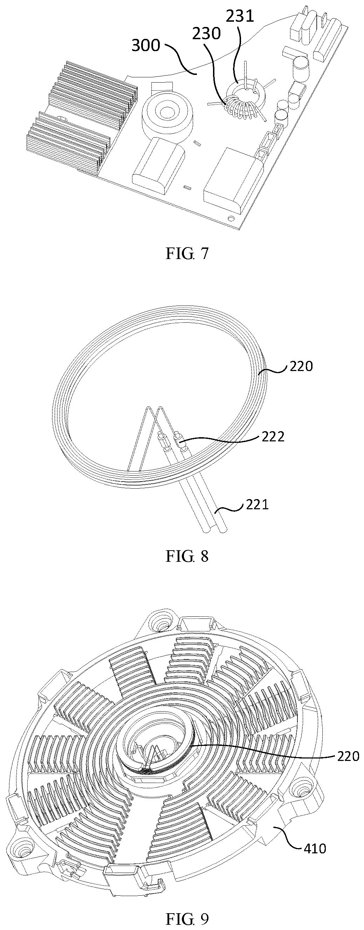

As shown in FIG. 7, in another embodiment, the third coil 230 is arranged on the first circuit board 300. Specifically, the third coil 230 is wound around a magnetizer 231. The magnetizer 231 is fixed on the first circuit board 300. The third coil 230 couples with the first alternating magnetic field through the magnetizer 231.

In the above two embodiments, the third coil 230 couples with the first alternating magnetic field through the magnetizer 231 to avoid position restriction caused by the third coil 230 directly inducting the first alternating magnetic field, such that a structure of the first support 410 may be simplified, thereby simplifying a process of machining and assembling the first support 410 and lowering difficulty of machining and assembling the first support 410. In addition, engagement between the magnetizer 231 and the third coil 230 is simple, and machining and assembling to achieve engagement between the magnetizer 231 and the third coil 230 may be easy. The magnetizer 231 may allow an alternating magnetic field acting on the third coil 230 to be more stable. The third coil 230 is arranged on the first support 410 through the support bar 411. In this way, a connecting structure may be simple and may be assembled easily. The third coil 230 is arranged on the first circuit board 300, available spaces of the first circuit board 300 may be utilized properly, spaces of other components do not need to be occupied, and a size of the cooking device may not be increased.

In this embodiment, the housing 100 includes a base 110 and a panel 120 capped on the base 110. The cooking device further includes an elastic support 430 disposed between the first support 410 and the second support 420, such that the second support 420 may elastically abut against a side of the panel 120 away from the container 20, such that the second coil 220 is disposed more stably with respect to the panel 120, so as to ensure an intensity and an accuracy of the second coil 220 inducting the electrical eddy current. Further, a position accuracy of the second coil 220 while manufacturing the cook device 10 in batches may be ensured, allowing the temperature to be measured more accurately.

In this embodiment, the second coil 220 is wound to form a circular ring, such that a relatively large area may be formed by taking less material, such that the second coil 220 has a better structural strength, a higher resistance against a short circuit, and a uniform magnetic flux. In some embodiments, the second coil 220 may be wound to form a rectangular ring, or a polygonal ring, which is not limited herein.

In this embodiment, the cooking device 10 further includes a cover plate 130 capped on the base 110. The panel 120 is arranged on the cover plate 130, and a central part of the cover plate 130 is hollow, such that the second support 420 abuts against the panel 120.

In this embodiment, the cooking device 10 further includes a thermal insulator 440 disposed between the second support 420 and the panel 120, such that the second coil 220 and/or the second support 420 may not be overheated, which may cause a damage of the second coil 220 and/or the second support 420.

In this embodiment, the cooking device 10 further includes a second circuit board 421 arranged on the first support 410 or the second support 420. The second coil 220 is electrically connected to the second circuit board 421 through a wire 221, and the second coil 220 is electrically connected to the first board 300 through the second circuit board 421. The wire 221 may be fixed to the second circuit board 421 by welding, by insertion, by pressing, and the like. The second circuit board 421 is arranged to allow the second coil 220 to be electrically connected to the first circuit board 300, such that an excessively long and complicated routing, which is caused by the second coil 220 being connected to the first board 300 directly through the wire 221, may be avoided, enabling an electrical connection structure to be stable and ensuring a signal transmission effect.

In some embodiments, the second coil 220 mag be connected to the first board 300 through the wire 221, which is not limited. The wire 221 may be fixed on the first board 300 by welding, insertion or compressing.

As shown in FIG. 8, in this embodiment, the second coil 220 is connected to the wire 221 through a riveted joint 222, enabling connection between the second coil 220 and the wire 221 to be more stable and ensuring the signal transmission effect. In some embodiments, the second coil 220 may be directly welded to the wire 221, which is not limited herein.

In this embodiment, the cooking device 10 further includes a temperature sensor 450 arranged on the first support 410 or the second support 420. The temperature sensor 450 is configured for measuring the temperature of the container 20 and may assist in verifying the temperature measured by the second coil 220, allowing the measured result to be more accurate. Alternatively, the temperature measurement may be achieved by the temperature sensor 450 in case that the second coil 220 measuring the temperature does not work.

In this embodiment, the temperature sensor 450 may be a thermistor sensor, a thermocouple sensor, an infrared temperature sensor, or an ultrasonic detection sensor.

In this embodiment, the cooking device 10 further includes a temperature switch (not shown in the drawings) arranged on the first support 410 or the second support 420 and connected to the first circuit board 300. The temperature switch 300 is configured for cutting off the circuit when the container 20 is overheated so as to prevent the first coil 210 from generating the first alternating magnetic field, improving reliability and safety of the cooking device 10.

In some embodiments, the temperature switch may be serially connected to the first coil 210, which is not limited herein.

In this embodiment, the temperature switch may be a thermal fuse, a temperature limit switch, a thermostat, and so on.

As shown in FIG. 9 to FIG. 11, in another embodiment, the cooking device 10 may be only arranged with the first support 410. The first coil 210 and the second coil 220 are respectively wound and are arranged on the first support 410. The second coil 220 is spaced apart from the panel 120 with a preset distance to fix a position of the second coil 220 relative to the panel 120. Since the first coil 210 and the second coil 220 are both arranged on the first support 410, the cooking device 10 may be more stable, the process of manufacturing and assembling the cooking device 10 may be simple, and a machining efficiency may be high.

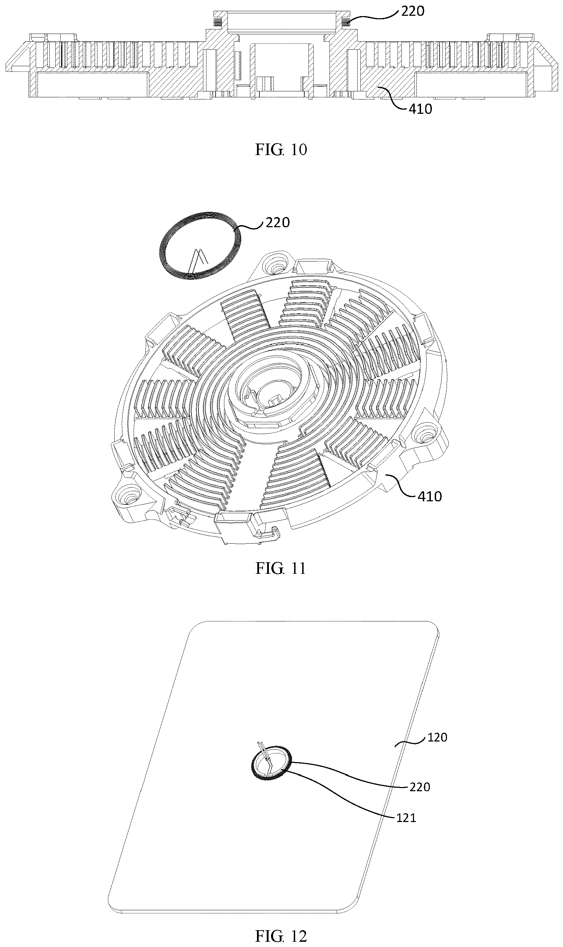

As shown in FIG. 12 to FIG. 14, in another embodiment, the panel 120 may be configured as a one-piece structure or fixedly arranged with a third support 121. The second coil 220 is wound around the third support 121, such that the position of the second coil 220 relative to the panel 120 may be more stable and accurate, so as to ensure the intensity and the accuracy of the second coil 220 inducting electrical eddy current, ensuring the position accuracy of the second coil 220 while manufacturing the cooking device 10 in batches, enabling the temperature to be measured more accurately. Compared with arranging the second coil 220 on the first support 410 or the second support 420, in this embodiment, only the structure of the panel 120 needs to be changed, and the machining difficulty is lower.

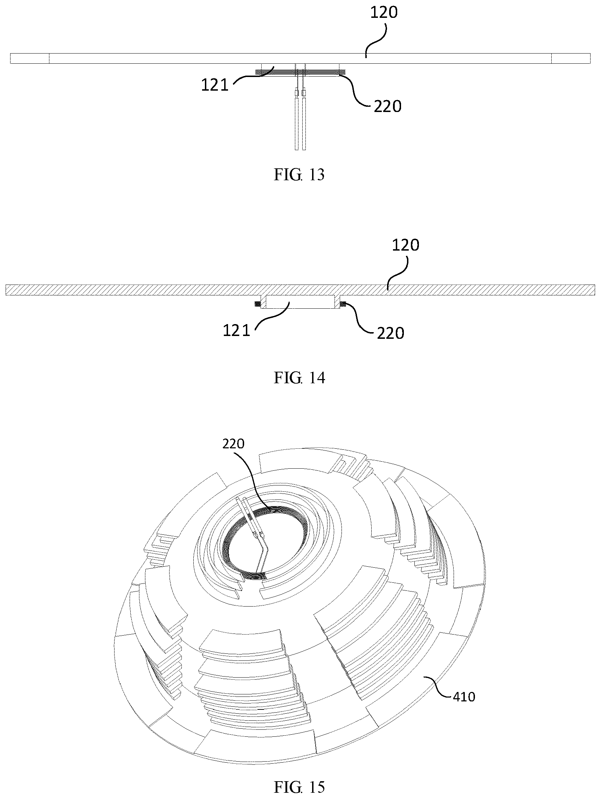

As shown in FIG. 15 to FIG. 17, in another embodiment, for example, in the cooking device 10 such as a rice cooker, the first support 410 is bowl-shaped, the first coil 410 is wound around a side of the first support 410 so as to perform electromagnetic heating on the side the container 20. The second coil 220 is wound and arranged on a bottom of the first coil 410 so as to fit an original structure of the first support 410, decreasing a change in the first support 410, and lowering the difficulty of manufacturing the first support 410, thereby reducing a costs of manufacturing the first support 410. The second coil 220 is directly embedded in the bottom of the first support 410, such that a plane where the second coil 220 is disposed is parallel to a plane where the first coil 210 wound around the side of the first support 410 is disposed, facilitating the second coil 220 to induce the electrical eddy current. Further, a position of the second coil 220 relative to the container 20 is stable, ensuring the position accuracy of the second coil 220 while manufacturing the cooking device 10 in batches, enabling the temperature to be measured more accurately.

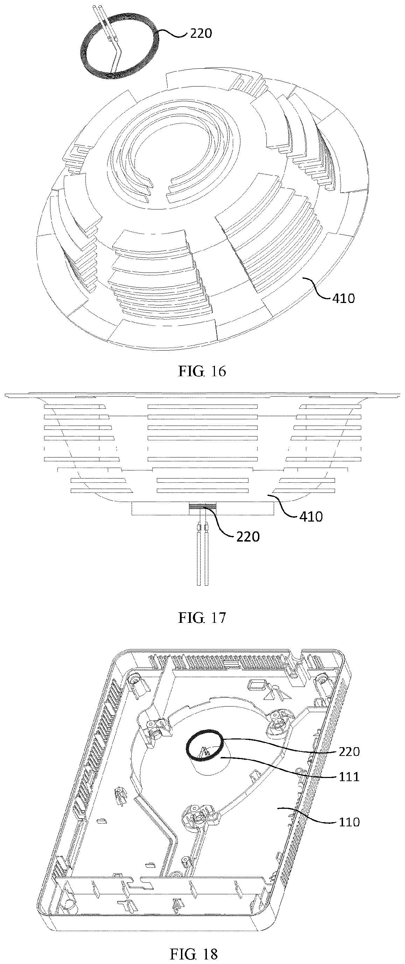

As shown in FIG. 18 to FIG. 20, in another embodiment, the base 110 may be configured as a one-piece structure or fixedly arranged with a fourth support 111. The second coil 220 is wound and arranged on the fourth support 111 and is spaced apart from the panel 120, which is capped on the base 110, with a preset distance.

The second coil 220 is arranged on the base 110 so as to assemble the second coil 220 in a process manufacturing the base 110. A structure of the assembly of the second coil 220 and the base 110 is simple, and the second coil 220 and the base 110 may be assembled easily. Further, the position of the second coil 220 relative to the panel 12 is more stable so as to ensure the intensity and the accuracy of the second coil 220 inducting electrical eddy current, ensuring the position accuracy of the second coil 220 while manufacturing the cooking device 10 in batches, allowing the temperature to be measured more accurately.

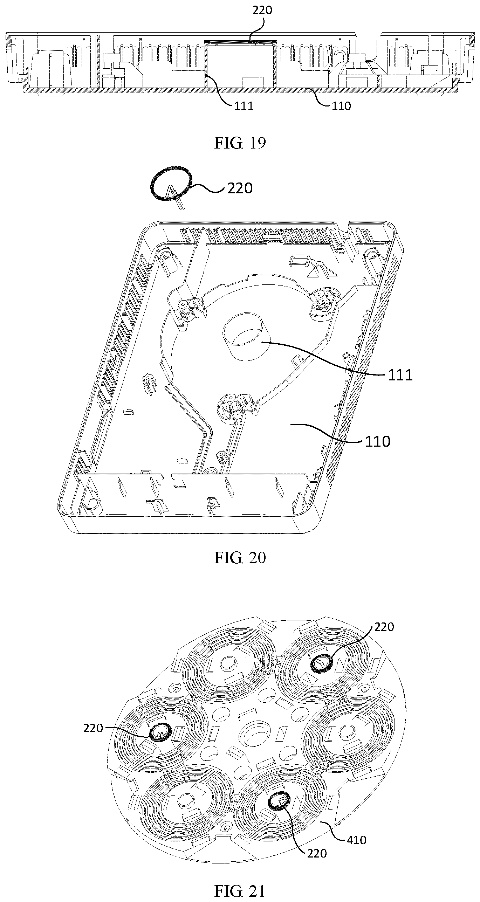

As shown in FIG. 21 to FIG. 22, in another embodiment, a plurality of first coils 210 may be arranged. The plurality of first coils 210 may be wound and arranged on the first support 410. The second coil 220 may be arranged at a position adjacent to at least one of the plurality of first supports 210. For example, six first coils 210 are arranged on the first support 410 along a circumferential direction and are spaced apart from each other, and the second coils 220 is arranged in a central position of each of three non-adjacent first coils 210.

In other embodiments, the number of first coils 210 and the number of second coils 220 may be determined according to requirements, which will not be limited herein. A plurality of second coils 220 are arranged, the temperature measurement may be performed on multiple points and regions of the container. In this way, various temperature points may be measured when the container 20 is non-uniformly heated, such that a more accurate temperature data may be obtained by performing calculations, such as calculating an average. Cooperation of the plurality of first coils and the plurality of second coils 220 enables temperatures of various regions of the container 20 to be controlled and monitored respectively, or enables temperatures of a plurality of containers 20 received inside or arranged on the housing 100 to be controlled and monitored respectively.

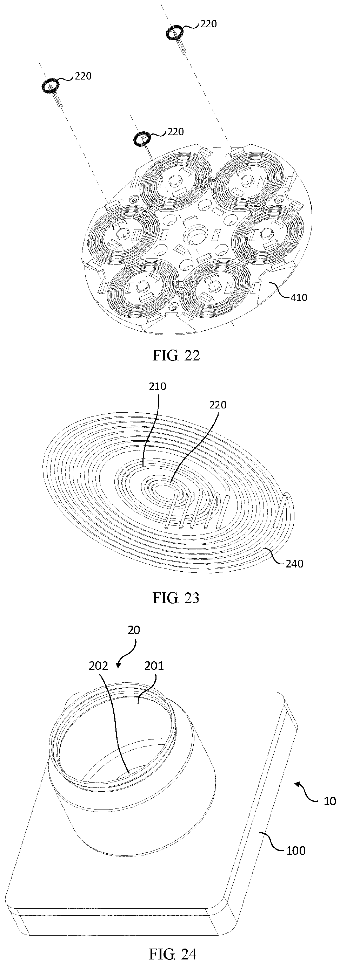

As shown in FIG. 23, in another embodiment, the cooking device 10 includes the first coil 210, the second coil 220, the third coil 230, and the fourth coil 240. The first coil 210 is configured for generating the first alternating magnetic field which acts on the container 20 so as to enable the container to induce the first alternating magnetic field to generate the electrical eddy current. The second coil 220 is arranged corresponding to the container 20, and is configured for inducting the first alternating magnetic field and the electrical eddy current. The third coil 230 is received in the accommodating space, and is configured for inducting the first alternating magnetic field. The fourth coil 240 is configured for generating a second alternating magnetic field which acts on the container 20 so as to electromagnetically heat the container 20.

In this embodiment, the first coil 210, which is configured to enable the container 20 to generate the electrical eddy current to enable the second coil 220 to generate the induction signal, and the fourth coil 240, which is configured for electromagnetically heat the container 20, are arranged separately, such that the structure is simple, and a temperature measurement part and a heating part may be controlled respectively and more accurately, thereby avoiding an influence in the accuracy of the temperature measurement caused by controlling various heating manners.

In this embodiment, a plane where the first coil 210 is disposed, a plane where the second coil 220 is disposed, and a plane where the fourth coil 240 is disposed are coincided or parallel to each other. The first coil 210 is disposed inside the fourth coil 240, the second coil 220 is disposed inside the first coil 210, and the central axis of the first coil 210, the central axis of the second coil 220, and a central axis of the fourth coil 240 are coincided. The fourth coil 240 is parallel to a plane that the container 20 inducting the second alternating magnetic field so as to ensure an efficiency of electromagnetically heating the container. The first coil 210 and the second coil 220 are also parallel to the plane that the container 20 inducting the second alternating magnetic field so as to ensure the intensity of the electrical eddy current generated by the container 20 and increase the intensity of the second coil 220 inducting the electrical eddy current. Increasing the magnetic induction intensity of each of the coils may allow the induction signal generated by the coils to be more stable, allowing the temperature to be measured more accurately.

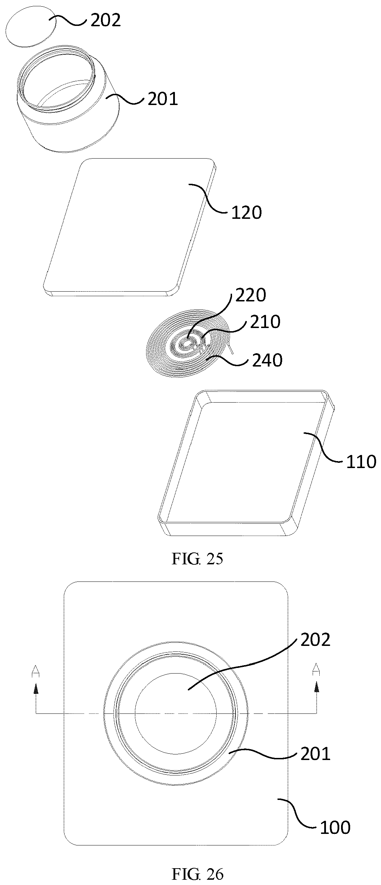

As shown in FIG. 24 to FIG. 27, an embodiment of the present disclosure provides a cooking apparatus, including the cooking device 10 and the container 20 arranged on the cooking device 10. The structure of the cooking device 10 may be referred to the cooking device 10 in above embodiments, which will not be repeated herein.

In this embodiment, the cooking apparatus may be a healthy pot, or the like.

In this embodiment, a heating body 202 is arranged in a body 201 of the container 20, the first alternating magnetic field acts on the heating body 202 so as to heat the heating body 202 and enable the heating body 202 to generate the electrical eddy current, and the first circuit board 300 is configured for obtaining a temperature of the heating body 202. Compared with taking the whole container 20 as the heating body 202, the heating body 202 is arranged inside the body 201 of the container 20, such that food ingredients received in the container 20 may be heated, saving a lot of costs. Further, the body 201 may have a certain heat insulation effect and prevent users from being burnt, which is safer for the user. The body 201 may be formed of transparent or semitransparent material, such that users may observe a cooking situation of the food in the container 20.

In this embodiment, the heating body 202 is flaky-shaped and is fixed at a bottom of the body 201 so as to act with the first alternating magnetic field generated by the first coil 210. Further, the flaky-shaped heating body 202 occupies a relatively small space so as to save more space for the ingredients.

In this embodiment, a plane where the heating body 202 is located is parallel to the plane where the first coil 210 is located so as to ensure the efficiency of the first coil 210, which electromagnetically heats the heating body 202. Since the plane where the second coil 220 is located coincides with or is parallel to the plane where the first coil 210 is located, the plane where the heating body 202 is located is parallel to the plane where the second coil 220 is located so as to ensure the intensity of the electrical eddy current generated by the heating body 202 and increase the intensity of the second coil 220 inducting the electrical eddy current.

In this embodiment, the heating body 202 is made of alloy material including iron, or conductive material including graphite.

In this embodiment, the body 201 is made of glass, plastic, ceramics, or wood.

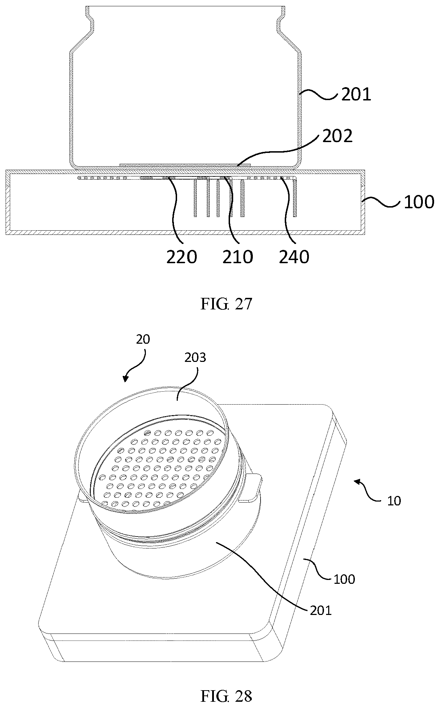

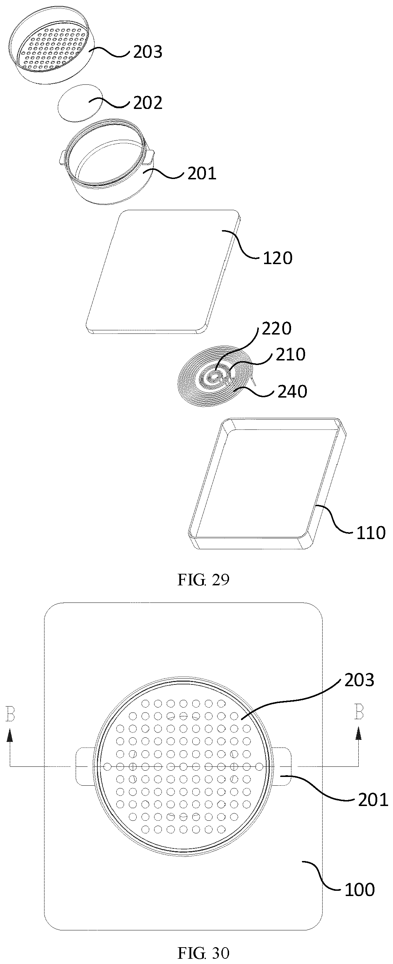

As shown in FIG. 28 to FIG. 31, the cooking apparatus in another embodiment of the present disclosure includes the cooking device 10 and the container 20 arranged on the cooking device 10. The structure of the cooking device 10 is referred to the cooking device 10 in above embodiments, and will not be repeated herein.

In this embodiment, the container 20 includes the body 201, the heating body 202 arranged in the body 201, and an evaporation partition 203. The structure of the heating body 202 is referred to the heating body 202 of the cooking device 10 in above embodiments, and will not be repeated herein. The evaporation partition 203 is supported and arranged on an opening of the body 201. The evaporation partition 203 allows the food to be heated by a steam, and allows a space of the container 20 for accommodating ingredients to be expanded.

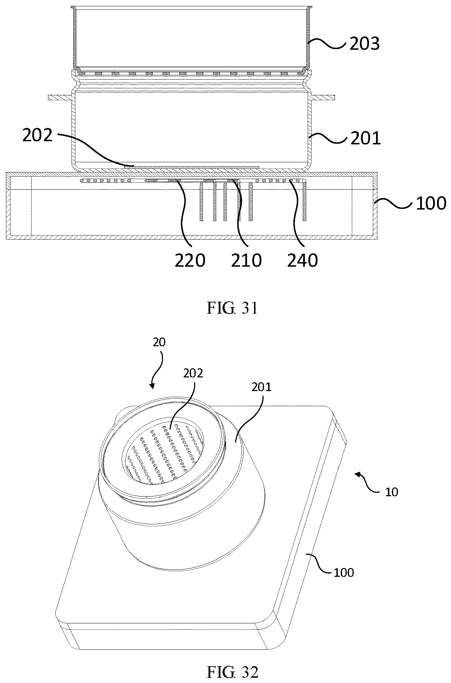

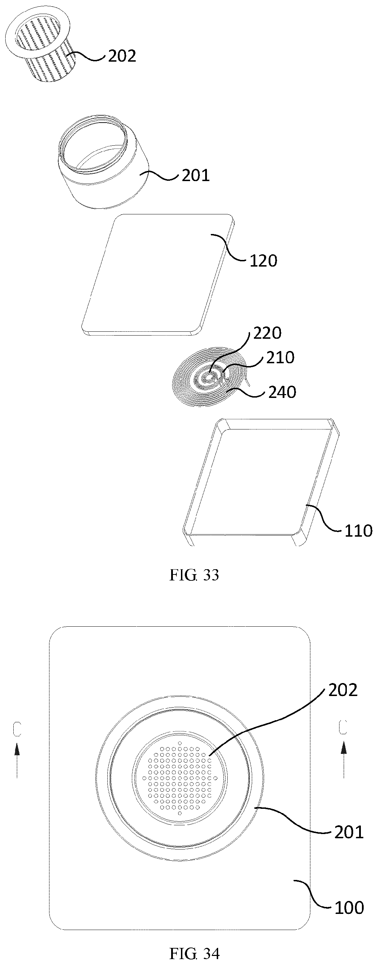

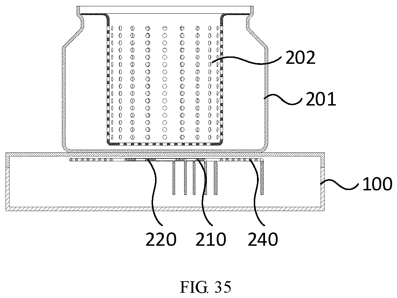

As shown in FIG. 32 to FIG. 35, the cooking apparatus in another embodiment of the present disclosure includes the cooking device 10 and the container 20 arranged on the cooking device 10. The structure of the cooking device 10 is referred to the cooking device 10 in above embodiments, and will not be repeated herein

In this embodiment, the container 20 includes the body 201 and the heating body 202 arranged in the body 201. The heating body 202 is barrel-shaped and is supported and arranged on the opening of the body. A bottom of the heating body 202 is closed to the bottom of the body 201 so as to act with the first alternating magnetic field generated by the first coil 210.

In this embodiment, the heating body 202 defines a plurality of through holes (not shown in the figure), enabling a liquid in the body 201 to circulate inside/outside the heating body so as to heat the food ingredients easily. In addition, the through holes may filter solids located between the body 201 and the heating body 202 when the liquid is poured out from the container 20.

The barrel-shaped heating body 202 directly achieves the filtering function, such that extra spaces of the container 20 may not be occupied by an additional filter, and such that the space of the container 20 may be utilized more properly.

The above description is only some embodiments of the present disclosure, and does not limit the scope of the present disclosure. Any equivalent structure or equivalent process transformation made by using the contents of the description and drawings of the present invention, direct or indirect application of the equivalent structure or equivalent process transformation shall fall within the scope of the present disclosure.

## Claims

1. A cooking device, **characterized by** comprising:
a housing, defining an accommodating space;
a first coil, received in the accommodating space and configured to generate a first alternating magnetic field, wherein the first alternating magnetic field is configured to act on a container arranged on inside the housing, enabling the container to induct an electrical eddy current generated by the first alternating magnetic field;
a second coil, disposed corresponding to the container and configured to induct the first alternating magnetic field and the electrical eddy current;
a third coil, received in the accommodating space, disposed on a side of the container of the first coil and/or a side of the second coil away from the housing where the container is arranged, and configured to induct the first alternating magnetic field; or received in the accommodating space and configured to couple with the first alternating magnetic field through a magnetizer;
a first circuit board, connected to the second coil and configured to obtain a temperature of the container according to an induction signal generated by the second coil; or connected to the second coil and the third coil and configured to obtain the temperature of the container according to an induction signal generated by the second coil and the third coil, wherein the second coil and the third coil are connected in series.

2. The cooking device according to claim 1, wherein the cooking device further comprises a first support, the first coil is wound and arranged on the first support, the second coil is arranged on the first coil.

3. The cooking device according to claim 2, wherein the cooking device further comprises a second support arranged on the first support, the second coil is wound around the second support.

4. The cooking device according to claim 3, wherein the housing comprises a base and a panel capped on the base, the cooking device further comprises an elastic support disposed between the first support and the second support to enable the second support to elastically abut against a side of the panel away from the container.

5. The cooking device according to claim 4, further comprising a thermal insulator disposed between the second support and the panel.

6. The cooking device according to claim 3, further comprising a second circuit board, wherein the second circuit board is arranged on the first support or the second support, the second coil is connected to the first circuit board through the second circuit board.

7. The cooking device according to claim 1, wherein a plane where the first coil is located, coincides with, or is parallel to a plane where the second coil is located, and the plane where the first coil is located, coincides with, or is parallel to a plane where the third coil is located.

8. The cooking device according to claim 1, wherein a coinciding area between a projection of the second coil and a projection of the third coil in a direction parallel to a central axis of the second coil is greater than or equal to 50% of a projection area of the third coil in the direction parallel to the central axis of the second coil.

9. The cooking device according to claim 1, wherein a central axis of the first coil coincides with a central axis of the second coil; or the central axis of the first coil, a central axis of the second coil, and a central axis of the third coil coincide with each other.

10. The cooking device according to claim 4, wherein the second coil is arranged on the first support or the base, and the second coil is spaced apart from the panel with a preset distance.

11. The cooking device according to claim 3, further comprising a temperature sensor, wherein the temperature sensor is arranged on the first support or the second support, and configured to measure the temperature of the container.

12. The cooking device according to claim 3, further comprising a temperature switch, wherein the temperature switch is arranged on the first support or the second support and connected to the first circuit board.

13. The cooking device according to claim 3, wherein a plurality of first coils are arranged, at least one of the plurality of first coils is arranged with a corresponding second coil and a corresponding third coil.

14. The cooking device according to claim 1, further comprising a fourth coil, configured to generate a second alternating magnetic field, wherein the second alternating magnetic field acts on the container so as to electromagnetically heat the container.

15. The cooking device according to claim 14, wherein a plane where the first coil is located, a plane where the fourth coil is located, and a plane where the second coil is located, are coincided, or parallel with each other.

16. The cooking device according to claim 14, wherein a central axis of the first coil, a central axis of the second coil, and a central axis of the fourth coil coincide with each other.

17. A cooking apparatus, **characterized by** comprising:
the cooking device of any one of claims 1 to 16 and the container arranged on or inside the cooking device of any one of claims 1 to 16.

18. The cooking apparatus according to claim 17, wherein the container comprises a body and a heating body arranged in the body, the first alternating magnetic field is configured to act on the heating body so as to heat the heating body and to enable the heating body to generate the electrical eddy current, and the first circuit board is configured to obtain a temperature of the heating body.

19. The cooking apparatus according to claim 18, wherein the heating body is flaky-shaped and is fixed at a bottom of the body.

20. The cooking apparatus according to claim 19, wherein the container further comprises an evaporation partition which is supported and arranged on an opening of the body.

21. The cooking apparatus according to claim 19, wherein the heating body is barrel-shaped and is supported and arranged on an opening of the body, and the heating body defines a plurality of through holes.
